# FASCICULE DE BREVET EUROPEEN

(11) **EP 1 384 624 B1**
(45) Date de publication et mention de la délivrance du brevet: **17.01.2007**
(21) Numéro de dépôt: 03291805.4
(22) Date de dépôt: 21.07.2003
(51) Int. Cl.: B60Q 1/30, B60Q 1/48

(54) **Feu de signalisation et dispositif d'affichage agencés dans un boîtier formé en partie par la carrosserie d'un véhicule**
Signalleuchte und Anzeigevorrichtung die in einem teilweise aus der Kfz-Karosserie bestehendem Gehäuse angeordnet sind
Signal lamp and display device arranged in a housing that is partly consisting in the vehicle body

(30) Priorité: 25.07.2002 FR 0209466
(43) Date de publication de la demande: 28.01.2004
(60) Demande divisionnaire: 06024686.5
(73) Titulaire: VALEO VISION, 93012 Bobigny Cédex (FR)
(72) Inventeur: Simon, Laurent, 78180 Montigny le Bretonneux (FR); Trebouet, Marcel, 78860 Saint Nom Breteche (FR)
(74) Mandataire: Renous Chan, Véronique

(56) Documents cités:
- EP-A- 0 683 068
- FR-A- 2 663 274
- FR-A- 2 716 145
- FR-A- 2 722 154
- GB-A- 2 283 821
- US-A- 6 086 230
- PATENT ABSTRACTS OF JAPAN vol. 1998, no. 11, 30 septembre 1998 (1998-09-30) & JP 10 166941 A (TOYOTA AUTO BODY CO LTD), 23 juin 1998 (1998-06-23)

## Description

L'invention propose un agencement de la partie arrière d'un véhicule automobile qui comporte un feu de signalisation de freinage orienté vers l'extérieur du véhicule et un dispositif d'affichage d'une information représentative de la distance entre le véhicule et un obstacle orienté globalement vers l'intérieur du véhicule.

Parmi les équipements électroniques des véhicules automobiles actuels on cite notamment un feu de signalisation de freinage, communément appelé troisième feu "stop", et un système d'assistance au parcage.

Le feu de signalisation est agencé à proximité d'un bord supérieur ou inférieur du panneau vitré arrière du véhicule.

Le système d'assistance au parcage comporte un capteur agencé dans un bouclier pare-chocs arrière du véhicule et un élément de signalisation qui est constitué d'un émetteur sonore et d'un dispositif d'affichage, qui permet à l'utilisateur d'avoir une notion de la distance entre l'arrière du véhicule et un obstacle.

Le dispositif d'affichage est généralement agencé à l'arrière du véhicule de façon à être visible par le conducteur lorsque celui-ci effectue une manoeuvre de parcage.

Le feu de signalisation et le dispositif d'affichage étant tous deux agencés à l'arrière du véhicule, il a été proposé, notamment dans le document EP-A-0.683.068, d'intégrer le feu de signalisation et le dispositif d'affichage dans le boîtier d'un même module d'équipement qui est accolé contre une face interne de la vitre arrière du véhicule, et à proximité du bord inférieur de celle-ci.

Pour former le flux lumineux du feu de signalisation, la paroi arrière du boîtier est composée de nombreuses lentilles, et elle est accolée contre la paroi interne de la lunette arrière.

Pour de nombreux véhicules, la lunette arrière est inclinée par rapport à la verticale. La plaque arrière du boîtier doit donc être aussi inclinée.

Cependant, lorsque la lunette arrière est fortement inclinée, la plaque arrière est elle aussi fortement inclinée, et, pour que le faisceau lumineux soit suffisamment visible, elle doit recouvrir une surface importante de la lunette arrière.

La fabrication d'une telle plaque étant relativement onéreuse, le fait d'avoir une plaque de grandes dimensions augmente de ce fait le prix du module d'équipement.

De ce fait, il a été proposé des éléments d'équipement qui comportent un élément optique, comme par exemple une lentille de Fresnel, qui est agencé à l'intérieur du boîtier, et la paroi arrière du boîtier est réalisée par une plaque transparente en verre ou en plexiglas.

Lorsque le boîtier est monté sur le véhicule, la plaque est fixée à la lunette arrière par des moyens permettant une étanchéité, notamment pour éviter la formation de buée sur les faces en vis-à-vis de la plaque et de la lunette arrière.

La lunette arrière réalise donc les fonctions de protection et d'étanchéité de la plaque transparente qui est alors inutile.

Il est également connu du document JP 10 166941 un feu stop surélevé comprenant également une lampe destinée à éclairer une partie de l'habitacle. Le document FR 2 663 274 concerne un feu supplémentaire de signalisation logé dans une zone adjacente à la vitre et au pavillon du véhicule. Le document FR 2 716 145 décrit un dispositif indicateur de distance libre destiné à assister le conducteur lors de manoeuvres de stationnement utilisant une source lumineuse à géométrie d'éclairement variable et disposé à proximité d'une vitre avant ou arrière du véhicule. Le document US 6 089 230 décrit un dispositif comprenant un feu de signalisation et un dispositif d'éclairage de l'intérieur de l'habitacle du véhicule, avec un support commun pour les deux lampes. Le document FR 2 722 154 décrit un agencement permettant d'éviter les fuites de lumière pour feu de signalisation implanté au niveau du pavillon du véhicule, entre une traverse et un vitrage, ledit feu comprenant un module de lumière dont le faisceau lumineux est dirigé à travers le vitrage vers l'extérieur du véhicule. Le document GB 2 283 821 décrit un dispositif de signalisation pour véhicule comprenant une unité que l'on peut monter à l'arrière du véhicule et qui inclut un capteur pour détecter les décélérations et un système d'éclairage.

Pour remédier à ces inconvénients, l'invention propose un agencement de la partie arrière d'un véhicule du type décrit précédemment, selon les caractéristiques techniques de la revendication 1. Selon d'autres caractéristiques de l'invention:
- le boîtier est formé en partie par une partie d'un pavillon globalement horizontal de la carrosserie du véhicule et/ou par une partie d'un panneau transversal arrière de la carrosserie du véhicule qui prolonge l'extrémité longitudinale arrière du pavillon , et le feu de signalisation et le dispositif d'affichage sont agencés verticalement à une distance de l'élément de carrosserie inférieure à la distance verticale entre l'élément de garniture et la face inférieure de l'élément de carrosserie, le boîtier comportant un guide de lumière qui guide le flux lumineux émis par les éléments électroluminescents du dispositif d'affichage vers une ouverture du boîtier agencée verticalement au-dessous de l'élément de garniture;
- le panneau transversal arrière comporte une ouverture qui est obturée par un élément perméable à la lumière qui est traversé par le flux lumineux généré par les éléments électroluminescents du feu de signalisation ;
- une paroi transversale avant du boîtier comporte une ouverture obturée par un élément perméable à la lumière qui est traversé par le flux lumineux généré par les éléments électroluminescents du dispositif d'affichage ;
- l'agencement comporte un unique connecteur électrique d'alimentation de toutes les pistes d'alimentation électrique des éléments électroluminescents appartenant au feu de signalisation et au dispositif d'affichage ;
- les composants du feu de signalisation, du dispositif d'affichage respectivement, sont agencés sur une face de la platine porte-composants commune respectivement ;
- le dispositif d'affichage comporte plusieurs éléments électroluminescents dont au moins deux éléments électroluminescents sont de couleurs différentes.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective de l'arrière d'un véhicule automobile comportant un agencement conforme aux enseignements de l'invention ;
- la figure 2 est une section suivant un plan longitudinal vertical de l'agencement représenté à la figure 1 ; suivant un mode de réalisation ne faisant pas partie de l'invention;
- la figure 3 est une vue similaire à celle de la figure 2 représentant un mode de réalisation de l'invention ;
- la figure 4 est une vue similaire à celle de la figure 2 représentant un autre mode de réalisation de l'invention.

Pour la description de l'invention, on adoptera à titre non limitatif les orientations verticale, longitudinale et transversale selon le repère V, L, T indiqué aux figures.

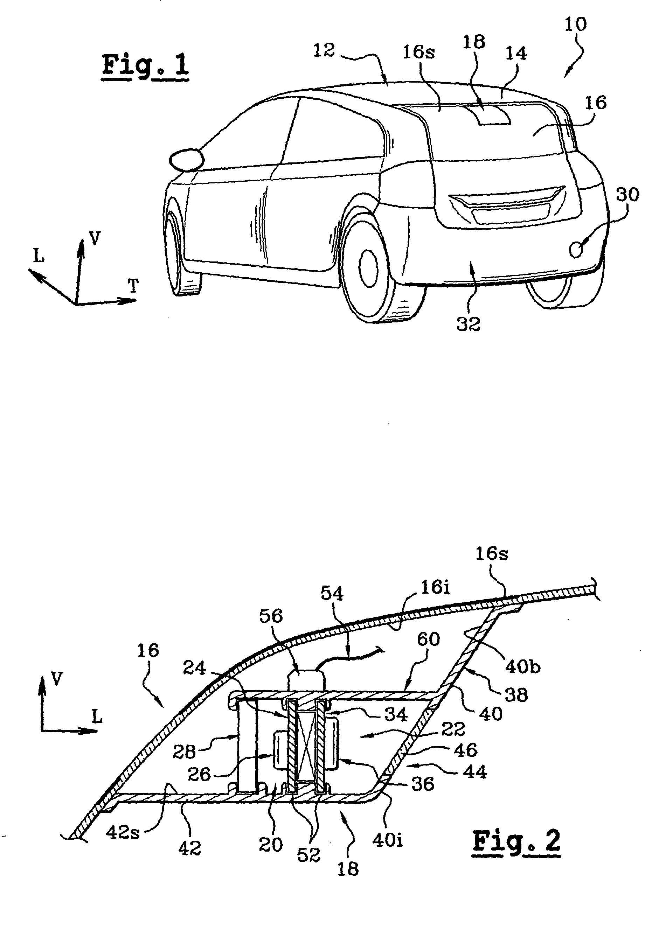

On adoptera aussi la direction d'arrière en avant comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 un véhicule automobile 10 conventionnel dont la partie supérieure de la carrosserie forme un pavillon 12 qui s'étend longitudinalement globalement horizontalement, et dont l'extrémité longitudinale arrière 14 est prolongé par panneau vitré 16, ou lunette arrière, qui s'étend globalement transversalement et verticalement, et dont le bord supérieur 16s est recourbé vers l'avant.

Un boîtier 18 d'équipement est agencé à proximité du bord transversal supérieur 16s de la lunette 16 arrière et contre la face interne 16i de celui-ci.

Comme on peut le voir aux figures 2 à 4, le boîtier 18 d'équipement comporte un feu de signalisation 20 de freinage et un dispositif d'affichage 22 d'une information représentative de la distance entre le véhicule 10 et un obstacle.

Le feu de signalisation 20 est orienté longitudinalement vers l'extérieur du véhicule 10 c'est-à-dire vers l'arrière. Il comporte une platine porte-composants 24 électroniques qui comporte elle-même au moins une piste conductrice (non représentée), des composants électroniques, notamment des éléments électroluminescents 26 qui sont généralement des ampoules ou des diodes électroluminescentes et qui émettent un flux lumineux généralement de couleur rouge. Le feu de signalisation 20 comporte aussi un élément optique 28 comme une lentille de Fresnel qui permet d'orienter le flux lumineux généré par les éléments électroluminescents 26 vers l'arrière.

Le dispositif d'affichage 22 est un sous-ensemble d'un dispositif d'aide au parcage qui comporte un capteur 30, généralement à ultrasons, qui est agencé dans le bouclier arrière 32 du véhicule 10, un calculateur (non représenté) pour calculer la distance entre le véhicule 10 et un obstacle situé à l'arrière du véhicule 10, et un dispositif de signalisation pour informer le conducteur de la distance entre le véhicule 10 et l'obstacle.

En règle générale, le dispositif de signalisation comporte un avertisseur sonore combiné avec le dispositif d'affichage 22 qui émettent un son, respectivement une signalisation optique, représentatifs de la distance entre le véhicule 10 et l'obstacle.

Le dispositif d'affichage 22 comporte plusieurs zones d'affichage de couleurs différentes, généralement jaune, verte et rouge, qui s'allument successivement selon que la distance entre le véhicule 10 et l'obstacle diminue.

Le dispositif d'affichage 22 est constitué d'une platine porte-composants 34 électroniques qui comporte elle-même au moins une piste conductrice (non représentée), des composants électroniques, notamment des éléments électroluminescents 36 qui sont généralement des ampoules ou des diodes.

Pour être visible du conducteur, le dispositif d'affichage 22 est orienté longitudinalement vers l'intérieur du véhicule 10, c'est-à-dire vers l'avant.

Le boîtier 18 d'équipement comporte aussi un élément structurel 38 ouvert qui est agencé à l'intérieur du véhicule 10, et qui porte le feu de signalisation 20 et le dispositif d'affichage 22.

L'élément structurel 38 est réalisé en une seule pièce, par exemple par moulage, et il est formé d'une première paroi 40 transversale avant, d'une deuxième paroi 42 inférieure globalement horizontale et de deux parois latérales (non représentées).

La paroi avant 40 comporte une ouverture 44 située en vis-à-vis des éléments électroluminescents 36 du dispositif d'affichage 22 qui est obturée par un élément 46 perméable à la lumière et qui est traversée par le flux lumineux généré par les éléments électroluminescents 36 du dispositif d'affichage 22.

La deuxième paroi 42 de l'élément structurel 38 est reliée à l'extrémité inférieure 40i de la paroi avant 40 et elle comporte des moyens de support du feu de signalisation 20, du dispositif d'affichage 22 et de l'élément optique 28.

Conformément à l'invention, et comme on l'a représenté à la figure 1, l'élément structurel 38 est fixé à la face interne 16i de la lunette 16 arrière pour fermer de manière hermétique le boîtier 18.

L'élément structurel 38 peut être fixé par tout moyen connu, cependant, selon un mode de réalisation préféré, l'élément structurel 38 est fixé par collage, qui est un mode de fixation peu visible au travers de la lunette arrière 16.

Selon la configuration de la structure de caisse du véhicule 10, le bord supérieur 16s de la lunette 16 arrière s'étend plus ou moins vers l'avant du véhicule 10. Dans certains cas, il se peut que si l'élément structurel 38 est uniquement fixé à la lunette 16 arrière, l'espace délimité par le boîtier 18 soit insuffisant pour loger entièrement le feu de signalisation 20 et le dispositif d'affichage 22.

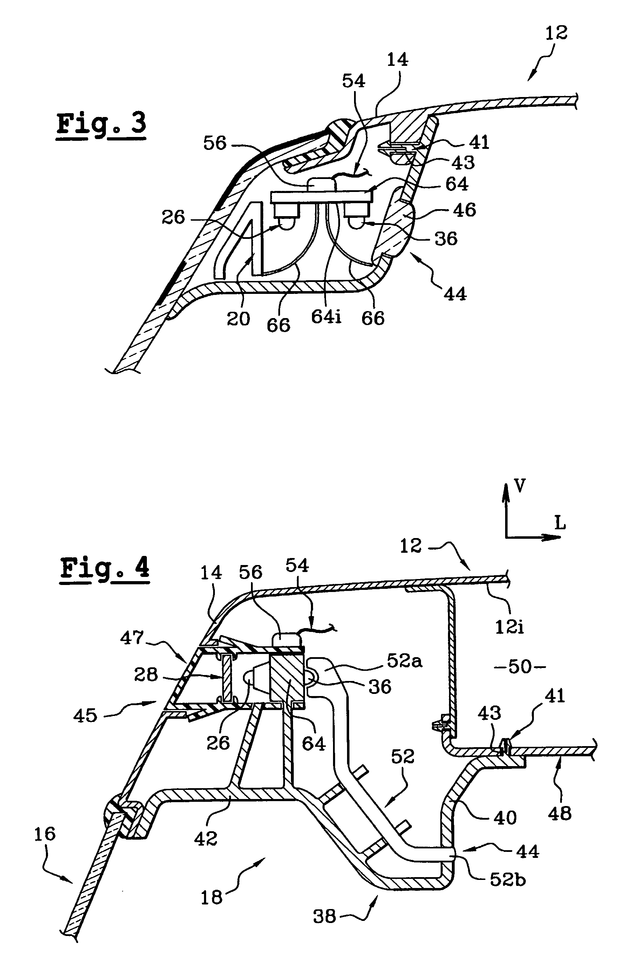

C'est pourquoi, selon une variante de réalisation de l'invention, représentée à la figure 3, l'élément structurel 38 est fixé à la lunette 16 arrière et au pavillon 12, et selon une autre variante de l'invention représentée à la figure 4, pour laquelle le bord transversal 14 arrière du pavillon 12 est recourbé vers le bas enformant un panneau transversal arrière, l'élément structurel 38 est uniquement fixé à l'extrémité arrière 14 du pavillon 12.

Ainsi, quelle que soit la configuration de la carrosserie du véhicule 10, le boîtier 18 est formé en partie par une partie de la carrosserie du véhicule 10, que ce soit une partie de la lunette 16 arrière, une partie du pavillon 12 ou bien une partie de chaque.

Le pavillon 12, qui est généralement réalisé en tôle, est un élément opaque, autorisant ainsi des moyens de fixation de l'élément structurel 38 qui sont plus efficaces que le collage, ou dont la mise en oeuvre est plus aisée, et qui sont moins esthétiques. Cependant, ces moyens de fixation étant en général dissimulés à l'intérieur du boîtier 18, ils ne nuisent pas à l'esthétique générale du véhicule 10.

Ces moyens de fixation consistent ici en des pattes 41 déformables élastiquement qui sont reçues dans des logements 43 complémentaires du pavillon 12.

Lorsque l'extrémité arrière 14 du pavillon 12 est recourbée vers l'arrière, celle-ci forme un obstacle au flux lumineux généré par le feu de signalisation 20. C'est pourquoi, comme on l'a représenté à la figure 4, l'extrémité arrière 14 du pavillon12 comporte une ouverture 45 qui est obturée de manière étanche par un élément 47 perméable à la lumière. Cet élément est alors traversé par le flux de lumière généré par les éléments électroluminescents 26 du feu de signalisation 20.

Le boîtier 18 est ainsi globalement agencé au coin supérieur arrière du véhicule 10. Cependant, selon le niveau de finition du véhicule 10, celui-ci comporte un élément d'habillage 48, ou garniture, intérieur utilisé pour l'isolation phonique et thermique de l'habitacle du véhicule 10.

L' élément d'habillage 48 recouvre la totalité de la carrosserie du véhicule 10 et s'étend à distance de celle-ci pour former un volume d'air 50 réalisant l'isolation de l'habitacle.

Ainsi, comme on l'a représenté à la figure 4, le véhicule 10 comporte un élément de garniture 48 qui s'étend horizontalement en vis-à-vis et à distance de la face horizontale interne 12i du pavillon 12.

Le feu de signalisation 20 et le dispositif d'affichage 22 sont généralement de faibles dimensions et ils sont proches de la face interne 12i du pavillon 12.

Cependant, du fait de la présence de l'élément de garniture, le dispositif d'affichage 22 peut être agencé à une distance du pavillon 12 inférieure à la distance entre l'élément de garniture 48 et le pavillon 12.

Le dispositif d'affichage 22 est alors masqué par l'élément de garniture 48.

Pour remédier à ce problème, et selon une variante de réalisation de l'invention, la paroi avant 40 et la paroi inférieure 42 du boîtier 18 s'étendent au-dessous de l'élément de garniture 48, et un guide de lumière 52 est agencé à l'intérieur du boîtier 18 de manière qu'une première extrémité 52a reçoive le flux lumineux produit par le dispositif d'affichage 22, et qu'une deuxième extrémité 52b débouche dans l'ouverture 44 de la paroi avant du boîtier 18, au-dessous de l'élément de garniture 48, de manière à être visible par le conducteur.

Le feu de signalisation 20 et le dispositif d'affichage 22 comportent tous les deux des circuits électroniques différents dont les moyens de commande respectifs sont souvent agencés en deux endroits différents dans le véhicule 10.

Ainsi, le feu de signalisation 20 et le dispositif d'affichage 22 nécessitent d'être reliés à leurs moyens de commande respectifs par des circuits de câblage distincts, ce qui impose, lors de l'assemblage du véhicule 10, un grand nombre de tests et donc un accroissement des coûts de fabrication.

C'est pourquoi, selon l'invention, le feu de signalisation 20 et le dispositif d'affichage 22 sont reliés à leurs moyens de commande respectifs par l'intermédiaire d'un unique circuit de câblage 54 dont une première extrémité (non représentée) est divisée en deux parties reliées chacune aux moyens de commande du feu de signalisation 20 ou du dispositif d'affichage 22, et dont l'autre extrémité est reliée au feu de signalisation 20 et au dispositif d'affichage 22 par l'intermédiaire d'un connecteur 56 unique.

Ce connecteur 56 permet de rassembler les circuits électroniques que le feu de signalisation 20 et le dispositif d'affichage 22 ont en commun, notamment le circuit de masse. Le connecteur 56 permet aussi de réduire les étapes d'assemblage car une seule manipulation est nécessaire pour avoir un branchement simultané du feu de signalisation 20 et du dispositif d'affichage 22.

Divers modes de réalisation de la platine porte-composants 24, 34 des deux dispositifs électroniques peuvent alors être envisagés.

Selon un premier mode de réalisation ne faisant pas partie de l'invention représenté à la figure 2, le feu de signalisation 20 et le dispositif d'affichage 22 sont chacun agencés sur une platine porte-composants 24, 34 distincte.

Ce mode de réalisation permet de conserver une même structure du boîtier 18 et d'y agencer sélectivement le feu de signalisation 20 et/ou le dispositif d'affichage 22, par exemple en fonction du niveau d'équipement du véhicule 10.

Ici, les platines porte-composants 24, 34 s'étendent transversalement verticalement, parallèlement l'une par rapport à l'autre et les éléments électroluminescents 26, 36 sont agencés sur leurs faces opposées respectives.

Pour maintenir les platines porte-composants 24, 34, le boîtier 18 comporte d'une part des rainures 58 transversales réalisées sur la face supérieure 42s de la paroi inférieure qui reçoivent chacune un bord inférieur complémentaire d'une platine porte-composants 24, 34, et il comporte d'autre part une cloison horizontale 60 qui s'étend longitudinalement vers l'arrière depuis la face arrière 40b de la paroi avant 40, et qui comporte elle aussi des rainures transversales 62 qui reçoivent chacune un bord supérieur complémentaire d'une platine porte-composants 24, 34.

Selon un mode de réalisation de l'invention représenté aux figure 3 et 4, le feu de signalisation 20 et le dispositif d'affichage 22 sont tous les deux portés par une même platine porte-composants 64, ce qui permet de n'avoir qu'un seul élément à fixer à l'élément structurel 38 du boîtier 18, réduisant de ce fait les étapes de montage.

Selon une première variante représentée à la figure 3, la platine porte-composants 64 s'étend horizontalement et les éléments électroluminescents 26, 36 sont agencés sur la face inférieure 64i de la platine porte-composants. Un réflecteur optique 66 est interposé entre les éléments électroluminescents 26, 36 du feu de signalisation 20 et ceux du dispositif d'affichage 22 pour séparer les flux lumineux générés par chacun des éléments. Le réflecteur 66 permet ainsi d'éviter qu'un flux lumineux ne perturbe l'autre, notamment pour éviter que le flux lumineux du feu de signalisation 20, qui est rouge, ne soit confondu par le conducteur avec un signal du dispositif d'affichage 22 de la même couleur qui est généralement interprété comme la proximité d'un obstacle.

Enfin, selon une deuxième variante représentée à la figure 4, la platine porte-composants s'étend transversalement verticalement et les composants du feu de signalisation 20 et du dispositif d'affichage 22 sont respectivement agencés sur une face opposée de la platine porte-composants 64.

Il n'est alors plus nécessaire de séparer les flux lumineux générés par chacun des éléments, ce qui simplifie encore la structure de l'ensemble.

## Revendications

1. Agencement de la partie arrière d'un véhicule (10) automobile (10) qui comporte un feu de signalisation (20) de freinage orienté vers l'extérieur du véhicule (10) et un dispositif d'affichage (22) d'une information représentative de la distance entre le véhicule (10) et un obstacle orienté globalement vers l'intérieur du véhicule (10), le feu de signalisation (20) et le dispositif d'affichage (22) étant agencés à l'intérieur d'un boîtier (18) fermé hermétiquement qui est formé au moins en partie par une partie de la carrosserie du véhicule (10), **caractérisé en ce que** le feu de signalisation (20) et le dispositif d'affichage (22) sont munis d' éléments électroluminescents (26,36) et sont reliés à leurs moyens de commande respectif par l'intermédiaire d'un unique circuit de câblage (54) dont une extrémité est divisée en deux parties reliées chacune auxdits moyens de commande du feu (20) et du dispositif d'affichage (22) et dont l'autre extrémité est reliée au feu (20) et au dispositif d'affichage (22) par l'intermédiaire d'un connecteur (56) unique, les éléments électroluminescents du feu de signalisation (20) et du dispositif d'affichage (22) étant portés par une même face ou les faces opposées d'une platine porte-composant commune (64)

2. Agencement selon l'une des revendications précédentes, **caractérisé en ce qu'**un réflecteur optique (66) est interposé entre les éléments électroluminescents (26,36) du feu (20) et du dispositif d'affichage (22).

3. Agencement de la partie arrière d'un véhicule (10) automobile (10) selon l'une des revendications précédentes, **caractérisé en ce que** le boîtier (18) est formé en partie par une partie d'un pavillon (12) globalement horizontal de la carrosserie du véhicule (10) et/ou par une partie d'un panneau transversal arrière (14, 16) de la carrosserie du véhicule (10) qui prolonge l'extrémité longitudinale arrière du pavillon (12), **en ce que** le véhicule (10) automobile comporte un élément de garniture (48) intérieure qui s'étend sensiblement horizontalement, en vis-à-vis et à distance de la face inférieure (12i) interne du pavillon (12), **en ce que** le feu de signalisation (20) et le dispositif d'affichage (22) sont agencés verticalement à une distance de l'élément de carrosserie (12) inférieure à la distance verticale entre l'élément de garniture (48) et la face inférieure (12i) de l'élément de carrosserie (12), et **en ce que** le boîtier (18) comporte un guide de lumière (52) qui guide le flux lumineux émis par des éléments électroluminescents (36) du dispositif d'affichage (22) vers une ouverture (44) du boîtier (18) agencée verticalement au-dessous de l'élément de garniture (48).

4. Agencement selon la revendication précédente, **caractérisé en ce que** le panneau transversal arrière (14) comporte une ouverture (45) qui est obturée par un élément (47) perméable à la lumière qui est traversé par le flux lumineux généré par des éléments électroluminescents (26) du feu de signalisation (20)

5. Agencement selon l'une des revendications précédentes, **caractérisé en ce qu'**une paroi transversale avant (40) du boîtier (18) comporte une ouverture (44) obturée par un élément (46) perméable à la lumière qui est traversé par le flux lumineux généré par les éléments électroluminescents (36) du dispositif d'affichage (22).

6. Agencement selon l'une quelconque des revendications précédentes, la platine commune (64) comportant au moins une piste conductrice pour l'alimentation électrique de composants, notamment d'éléments électroluminescents (26, 36), ledit agencement comportant un unique connecteur (56) électrique d'alimentation de toutes les pistes d'alimentation électrique des éléments électroluminescents (26, 36) appartenant au feu de signalisation (20) et au dispositif d'affichage (22).

7. Agencement selon la revendication précédente, **caractérisé en ce que** les composants du feu de signalisation (20), du dispositif d'affichage (22) respectivement, sont agencés sur une face (64i) de la platine porte-composants commune (64) respectivement.

8. Agencement selon l'une quelconque des revendications précédentes, **caractérisé en ce que** le dispositif d'affichage (22) comporte plusieurs éléments électroluminescents (36) dont au moins deux éléments électroluminescents (36) sont de couleurs différentes.

## Claims

1. A layout for the rear part of a motor vehicle (10), which includes a braking indicator light (20) oriented towards the outside of the vehicle (10), and a display device (22) for displaying an item of information representing the distance between the vehicle (10) and an obstacle which is oriented generally towards the interior of the vehicle (10), the indicator light (20) and the display device (22) being disposed in the interior of a hermetically sealed casing (18) which is closed off at least partly by part of the bodywork of the vehicle (10), **characterised in that** the indicator light (20) and the display device (22) are provided with electro-luminescent elements (26, 36) and are connected to their respective control means through a single wiring circuit (54), one end of which is divided into two parts each of which is connected to the said control means of the indicator light (20) and display device (22), the other end of the wiring circuit being connected to the indicator light (20) and display device (22) through a single connector (56), the electro-luminescent elements of the indicator light (20) and display device (22) being carried by a common face, or by the opposed faces, of a common carrier member (64) for carrying components.

2. A layout according to the preceding Claim, **characterised in that** an optical reflector (66) is interposed between the electro-luminescent elements (26, 36) of the indicator light (20) and display device (22).

3. A layout for the rear part of a motor vehicle (10) according to one of the preceding Claims, **characterised in that** the housing (18) is defined partly by a portion of a generally horizontal rough portion of the bodywork of the vehicle (10) and./or by a portion of a transverse rear panel (14, 16) of the bodywork of the vehicle (10) which is an extension of the longitudinal rear end of the roof portion (12), **in that** the motor vehicle (10) includes an internal bezel element (48) which extends substantially horizontally, in facing relationship with, and spaced from, the internal lower face (12i) of the roof portion (12), **in that** the indicator light (20) and display device (22) are disposed vertically, at a distance from the bodywork element (12) which is smaller than the vertical distance between the bezel element (48) and the lower face (12i) of the bodywork element (12), and **in that** the housing (18) includes a light guide (52) which guides the light flux emitted by the electro-luminescent elements (36) of the display device (22) towards an aperture (44) in the housing (18) which is disposed vertically below the bezel element (48).

4. A layout according to the preceding Claim, **characterised in that** the transverse rear panel (14) has an aperture (45) which is obturated by a translucent element (47) through which the light flux generated by the electro-luminescent elements (26) of the indicator light (20) passes.

5. A layout according to one of the preceding Claims, **characterised in that** a transverse front wall (40) of the housing (18) has an aperture (44) which is obturated by a translucent element (46) through which the light flux generated by the electro-luminescent elements (36) of the recording device (22) passes.

6. A layout according to any one of the preceding Claims, wherein the common carrier member (64) includes at least one conductive track for the electrical supply of the components, and in particular electro-luminescent elements (26, 36), the said layout including a single electrical connector (56) for supplying power to all of the electrical power supply tracks for the electro-luminescent elements (26, 36) of the indicator light (20) and the recording device (22).

7. A layout according to the preceding Claim, **characterised in that** the components of the indicator light (20) and of the recording device (22) respectively are arranged on a face (64i) of the common component carrier member (64) respectively.

8. A layout according to any one of the preceding Claims, **characterised in that** the recording device (22) includes a plurality of electro-luminescent elements (36), of which at least two electro-luminescent elements (36) are of different colours.

## Patentansprüche

1. Anordnung am Heckteil eines Kraftfahrzeugs (10) mit einer zur Außenseite des Fahrzeugs.(10) gerichteten Bremsleuchte (20) und einer allgemein zur Innenseite des Fahrzeugs (10) gerichteten Vorrichtung (22) zum Anzeigen einer Information, die für den Abstand zwischen dem Fahrzeug (10) und einem Hindernis repräsentativ ist, wobei die Signalleuchte (20) und die Anzeigevorrichtung (22) innen in einem hermetisch abgeschlossenen Gehäuse (18) angeordnet sind, das wenigstens teilweise von einem Karosserieteil des Fahrzeugs (10) gebildet ist,
**dadurch gekennzeichnet, dass** die Signalleuchte (20) und die Anzeigevorrichtung (22) mit Elektrolumineszenzelementen (26, 36) versehen und mit ihren zugehörigen Betätigungsmitteln durch einen einzigen Kabelkreis (54) verbunden sind, dessen eines Ende in zwei Teile geteilt ist, die beide mit den Betätigungsmitteln der Leuchte (20) und der Anzeigevorrichtung (22) verbunden sind, und dessen anderes Ende durch einen einzigen Verbinder (56) mit der Leuchte (20) und der Anzeigevorrichtung (22) verbunden ist, wobei die Elektrolumineszenzelemente der Signalleuchte (20) und der Anzeigevorrichtung (22) von ein und derselben Seite oder entgegengesetzten Seiten einer gemeinsamen Bauelement-Trägerplatine (64) getragen werden.

2. Anordnung nach dem vorhergehenden Anspruch,
**dadurch gekennzeichnet, dass** ein optischer Reflektor (66) zwischen die Elektrolumineszenzelemente (26, 36) der Leuchte und der Anzeigevorrichtung (22) eingefügt ist.

3. Anordnung am Heckteil eines Kraftfahrzeugs (10) nach einem der vorhergehenden Ansprüche,
**dadurch gekennzeichnet, dass** das Gehäuse (18) teilweise von einem Stück eines allgemein horizontalen Karosserieoberteils (12) des Fahrzeugs (10) und/oder von einem Stück einer quer verlaufenden Heckfläche (14, 16) der Karosserie des Fahrzeugs (10), welche das längs verlaufende, rückwärtige Ende des Karosserieoberteils (12) verlängert, gebildet ist, dass das Kraftfahrzeug (10) ein inneres Verkleidungselement (48) umfasst, welches der inneren Unterseite (12i) des Karosserieoberteils (12) gegenüberliegend und mit Abstand von dieser im Wesentlichen horizontal verläuft, dass die Signalleuchte (20) und die Anzeigevorrichtung (22) zu dem Karosserieteil (12) vertikal in einem Abstand angeordnet sind, der kleiner als der vertikale Abstand zwischen dem Verkleidungselement (48) und der Unterseite (12i) des Karosserieteils (12) ist, und dass das Gehäuse (18) einen Lichtleiter (52) umfasst, der den von den Elektrolumineszenzelementen (36) der Anzeigevorrichtung (22) emittierten Lichtstrom zu einer Öffnung (44) des Gehäuses (18) leitet, die vertikal unterhalb des Verkleidungselements (48) angeordnet ist.

4. Anordnung nach dem vorhergehenden Anspruch,
**dadurch gekennzeichnet, dass** die quer verlaufende Heckfläche (14) eine Öffnung (45) aufweist, die durch ein lichtdurchlässiges Element (47) verschlossen ist, das von dem Lichtstrom durchquert wird, der von den Elektrolumineszenzelementen (26) der Signalleuchte (20) erzeugt wird.

5. Anordnung nach einem der vorhergehenden Ansprüche,
**dadurch gekennzeichnet, dass** eine vordere Querwand (40) des Gehäuses (18) eine Öffnung (44) aufweist, die durch ein lichtdurchlässiges Element (46) verschlossen ist, das von dem Lichtstrom durchquert wird, der von den Elektrolumineszenzelementen (36) der Anzeigevorrichtung (22) erzeugt wird.

6. Anordnung nach einem der vorhergehenden Ansprüche, bei der die gemeinsame Platine (64) wenigstens eine Leiterbahn zur Stromversorgung der Bauelemente, insbesondere der Elektrolumineszenzelemente (26, 36) umfasst, wobei die Anordnung einen einzigen elektrischen Verbinder (56) zur Versorgung aller Leiterbahnen zur Stromversorgung der zu der Signalleuchte (20) und der Anzeigevorrichtung (22) gehörenden Elektrolumineszenzelemente (26, 36) umfasst.

7. Anordnung nach dem vorhergehenden Anspruch,
**dadurch gekennzeichnet, dass** die Bauelemente der Signalleuchte (20) bzw. der Anzeigevorrichtung (22) jeweils auf einer Seite (64i) der gemeinsamen Bauelemente-Trägerplatine (64) angeordnet sind.

8. Anordnung nach einem der vorhergehenden Ansprüche,
**dadurch gekennzeichnet, dass** die Anzeigevorrichtung (22) mehrere Elektrolumineszenzelemente (36) aufweist, von denen wenigstens zwei Elektrolumineszenzelemente (36) unterschiedliche Farben haben.
